# EUROPÄISCHE PATENTANMELDUNG

(11) **EP 1 388 397 A2**
(43) Veröffentlichungstag der Anmeldung: **11.02.2004**
(21) Anmeldenummer: 03017745.5
(22) Anmeldetag: 04.08.2003
(51) Int. Cl.: B25J 9/16

(54) **Verfahren und Vorrichtung zum synchronen von Handhabungsgeräten**

(30) Priorität: 06.08.2002 DE 10235943
(71) Anmelder: KUKA Roboter GmbH, 86165 Augsburg (DE)
(72) Erfinder: Graf, Stefan, 86637 Zusamaltheim (DE); Hagenauer, Andreas, 86316 Friedberg (DE); Chaffee, Michael, Gaines, MI 48436 (US); Stoddard, Kenneth, Rochester, MI 48306 (US)
(74) Vertreter: Lempert, Jost, Dipl.-Phys. Dr. rer.nat.

(57) **Zusammenfassung**

Ein Verfahren zum synchronen Steuern mehrerer Handhabungsgeräte, wie einer Mehrzahl von Industrierobotern, zeichnet sich dadurch aus, dass Steuerungen bestimmter Handhabungsgeräte nach Maßgabe durch in einem entsprechenden Steuerungsprogramm enthaltener Datenstrukturen, durch die sich zu synchronisierende Steuerungen und Synchronisationspunkte in den dort ablaufenden Steuerungsprogrammen eindeutig identifizieren lassen, Steuerungsinformationen austauschen und dass der Programmablauf in den zu synchronisierenden Steuerungen jeweils bei Erreichen der Synchronisationspunkte nach Maßgabe durch Inhalte der Datenstrukturen in Verbindung mit bereits ausgetauschten Steuerungsinformationen fortgesetzt oder bis zu einem Eintreffen entsprechender Informationen anderer zu synchronisierender Steuerungen unterbrochen wird.

## Beschreibung

Die Erfindung betrifft ein Verfahren zum synchronen Steuern mehrerer Handhabungsgeräte, wie einer Mehrzahl von Industrierobotern. Sie betrifft darüber hinaus eine Vorrichtung zum synchronen Steuern eines Handhabungsgeräts, wie eines Industrieroboters, in einem Verbund aus vernetzten Steuerungen einer Mehrzahl von Handhabungsgeräten, aufweisend: Speichermittel wenigstens zum Speichern eines Steuerungsprogramms für das Handhabungsgerät; Kommunikationsmittel zum Senden und Empfangen von Steuerungsinformationen an andere bzw. von anderen zu synchronisierende(n) Steuerungen und Prozessormittel zum Ausführen des Steuerungsprogramms in Abhängigkeit von den empfangenen Steuerungsinformationen.

In der industriellen Praxis ist bei den vielfältig eingesetzten Handhabungsgeräten, z.B. Industrierobotern, bei bestimmten Handhabungsvorgängen erforderlich, dass diese aufeinander abgestimmte, d.h. synchrone Bewegungen oder dergleichen ausführen. Dies ist z.B. der Fall, wenn zwei Roboter zum Fügen und ein dritter Roboter zum Verschweißen der gefügten Gegenstände eingesetzt sind.

Dazu ist es erforderlich, die in bekannten Industrierobotern regelmäßig vorhandenen programmierbaren Steuerungen wenigstens zeitweise zu synchronisieren, so dass zumindest während bestimmten kritischen Phasen ein definierter relativer Bewegungsablauf gewährleistet ist.

Die Steuerungsprogramme vorbekannter kooperierender Handhabungsgeräte beinhalten zu diesem Zweck bestimmte Synchronisationsanweisungen, welche durch die das Steuerungsprogramm in konkrete Maschinenanweisungen übertragende Interpreterprogramme übersetzt werden, woraufhin bestimmte Verfahrensabläufe zum Synchronisieren der entsprechenden Handhabungsgeräte erfolgen.

Bei vorbekannten Verfahren werden Ein- und Ausgänge der Robotersteuerungen zur Synchronisierung zwischen den Robotern verwendet. Eine Kommunikation kann dabei sowohl über Feldbussysteme als auch über direkt verdrahtete Ein- und Ausgänge der Steuerungen stattfinden. Konkret bedeutet dies: Das Steuerungsprogramm für ein Handhabungsgerät enthält eine oder mehrere Synchronisierungsanweisungen, woraufhin über die angesprochene Kommunikationshardware entsprechende Synchronisierungssignale direkt zu den Eingängen betroffener anderer Steuerungen geschickt werden.

Hierbei ist als nachteilig anzusehen, dass die Handhabung von Ein- und Ausgängen prinzipiell umständlich und fehleranfällig ist. Darüber hinaus ergibt sich ein systemtechnischer Mehraufwand, da die physikalischen Ein- und Ausgänge oder das Feldbussystem erst zur Verfügung gestellt werden müssen. Ferner müssen die zu synchronisierenden Steuerungen übereinstimmend ausgebildet sein, damit die jeweiligen Einund Ausgänge die gleiche Bedeutung besitzen, was die-Einsetzbarkeit derartiger-Verfahren einschränkt. Da die Steuerungen üblicherweise nicht direkt über einen Feldbus, sondern über eine zwischengeschaltete speicherprogrammierbare Anlagensteuerung (Anlagen-SPS) miteinander kommunizieren, muss auch in der Anlagen-SPS ein entsprechendes Abbilden (Mapping) der Ein- und Ausgänge berücksichtigt werden.

Eine erweiterte Kommunikation zwischen kooperierenden Steuerungen beinhaltet daher neben einer Änderung der Steuerungsprogramme auch eine Anpassung der Ein- und Ausgangskonfiguration, verbunden mit zusätzlichen Leitungen bei physikalischen Ein- und Ausgängen, zusätzlichem Programmieraufwand für die SPS und dergleichen. Sollen ferner die Synchronisationspunkte innerhalb des Programms, d.h. Programmstellen, an denen Synchronisationsanweisungen stehen, eindeutig sein, so ist es bei vorbekannten Synchronisationsverfahren erforderlich, für jeden Synchronisatiönspunkt einen eigenen Ausgang zu verwenden, da andernfalls bei einer Satzanwahl innerhalb des Steuerungsprogramms, d.h. einer Anwahl bestimmter Programmteile, die einer bestimmten geometrischen Position des Handhabungsgeräts entsprechen, die Synchronisation an einer falschen geometrischen Position erfolgen kann.

Verfahren zur synchronen Steuerung kooperierender Roboter sind beispielsweise aus EP 1 186 386 A2 und EP 1 090 722 A2 bekannt. Die genannten Druckschriften offenbaren synchrones Arbeiten einer Mehrzahl von Robotern, die entsprechend ihrer jeweiligen momentanen Arbeitsweise in Master-Roboter, Slave-Roboter und "normale", d.h. unabhängige Roboter unterschieden werden. Dazu findet über Kommunikationsleitungen ein aktiver Austausch von Positionsdaten und Interpolationsdaten (online berechnete Zwischenpositionen von Bewegungen mit hoher zeitlicher Dichte) statt, die der Master regelmäßig an alle Slaves sendet, so dass auf einer höheren hierarchischen Ebene die Steuerung des Master-Roboters eine übergeordnete Steuerungsfunktion für alle beteiligten Roboter ausübt.

Hierbei ist vor allem das Master-Slave-Konzept als nachteilig anzusehen, da auf diese Weise ein Roboter bzw. eine Steuerung an jeder Synchronisation beteiligt sein muss, wodurch dieses Synchronisierungs-Konzept hinsichtlich seiner Flexibilität beim praktischen Einsatz eingeschränkt ist:

EP 1 090 722 A2 offenbart in diesem Zusammenhang eine synchrone Steuerung für mehrere Roboter, deren Steuerungen je nach gebildetem Verbund (Gruppe bezüglich einer konkreten Anwendung zu synchronisierender Roboter) entweder als Master, als Slave oder verbund-unabhängig einsetzbar sind. Dazu werden mehrere komplette unabhängigen Programmabfolgen in jede Steuerung geladen bzw. gespeichert (Master-Programm, Slave-Programm, normales Programm), von denen jeweils eine abhängig vom gebildeten Verbund abgearbeitet wird. Dadurch ist bedingt, dass die Programmabfolgen von vornherein abgestimmt und festgelegt sein müssen.

Des Weiteren warten alle beteiligten Roboter, Master und Slaves, nach einer bestimmten Anzahl synchron ausgeführter Interpolations-Schritte aufeinander, bevor eine weitere Programmbearbeitung bzw. Bewegung erfolgt. Dadurch werden sämtliche synchronen Abläufe grundsätzlich zeitlich verlängert, da u.U. bestimmte Roboter daran gehindert werden, in der Zwischenzeit zusätzliche Arbeiten auszuführen bzw. alle Roboter auf den jeweils langsamsten warten müssen.

Zudem ist die beim Stand der Technik verwirklichte laufende Übermittlung von Positions- und Interpolationsdaten datentechnisch aufwendig und fehleranfällig.

Der Erfindung liegt die Aufgabe zugrunde, unter Vermeidung der vorstehend aufgeführten Nachteile ein flexibles Verfahren und eine zu dessen Ausführung geeignete Vorrichtung zum synchronen Steuern von Handhabungsgeräten unter Vereinfachung der Kommunikation zwischen zwei oder mehreren Steuerungen zu schaffen, wobei eine sichere Reaktion des Steuerungsprogramms bei Satzanwahl zu gewährleisten ist. Weiterhin liegt der Erfindung die Aufgabe zugrunde, Synchronisationsvorgänge steuerungstechnisch zuverlässiger und zeitlich verkürzt auszugestalten.

Die Aufgabe wird bei einem Verfahren der eingangs genannten Art zunächst dadurch gelöst, dass die Steuerungen bestimmter Handhabungsgeräte nach Maßgabe durch in den entsprechenden Steuerungsprogrammen enthaltener Datenstrukturen, durch die sich zu synchronisierende Steuerungen und Synchronisationspunkte in den dort ablaufenden Steuerungsprogrammen eindeutig identifizieren lassen, Steuerungsinformationen austauschen und dass der Steuerungsablauf in den zu synchronisierenden Steuerungen nach Erreichen der Synchronisationspunkte in allen Steuerungen gemeinsam nach Maßgabe durch Inhalte der Datenstrukturen in Verbindung mit bereits ausgetauschten Steuerungsinformationen fortgesetzt wird und weiterhin auch dadurch, dass die Steuerungen bestimmter Handhabungsgeräte nach Maßgabe durch in den entsprechenden Steuerungsprogrammen enthaltener Datenstrukturen, durch die sich zu synchronisierende Steuerungen und Synchronisationspunkte in den dort ablaufenden Steuerungsprogrammen eindeutig identifizieren lassen, Steuerungsinformationen austauschen und dass der Steuerungsablauf bis zum Eintreffen von Informationen anderer zu synchronisierender Steuerungen, dass diese den gemeinsamen Synchronisationspunkt erreicht haben, unterbrochen wird.

Zur Lösung der Aufgabe sieht die Erfindung weiterhin eine gattungsgemäße Vorrichtung vor, in den Speichermitteln eine Anzahl steuerungsrelevanter Datenstrukturen gespeichert ist, und dass die steuerungsrelevanten Datenstrukturen Steuerungsabschnitte zum Fortsetzen des Steuerungsablaufs nach Erhalt einer Nachricht von den drehbaren Steuerungen aufweisen, dass diese den entsprechenden Synchronisationspunkt erreicht haben und/oder Speichermittel wenigstens zum Speichern eines Steuerungsprogramms für das Handhabungsgerät; und dass die steuerungsrelevanten Datenstrukturen Steuerungsabschnitte zum Anhalten des Steuerungsablaufs bis zum Eintreffen von Informationen anderer synchronisierender Steuerungen, das diese den gemeinsamen Synchronisationspunkt erreicht haben.

Bevorzugte Ausgestaltungen der erfindungsgemäßen Vorrichtung sehen vor, dass die Sendezeitpunkte der Steuerungsinformationen den Zeitpunkten des Erreichens der Synchronisationspunkte entsprechen und/oder der Programmablauf in den Prozessormitteln bzw. eine entsprechende Bewegung des Handhabungsgeräts nach Maßgabe durch die in den Datenstrukturen enthaltenen Steuerungsdaten in Verbindung mit bereits ausgetauschten Steuerungsinformationen fortsetzbar oder zumindest bis zum Empfang entsprechender Informationen von anderen zu synchronisierenden Steuerungen anhaltbar ist. In weiterer Ausgestaltung kann vorgesehen sein, dass durch die in den Datenstrukturen enthaltenen Steuerungsdaten Synchronisationspunkte in dem Steuerungsprogramm und die zu synchronisierenden Steuerungen eindeutig identifizierbar sind.

Die Erfindung beinhaltet auch einen Verbund aus mindestens zwei erfindungsgemäßen Vorrichtungen.

Durch das erfindungsgemäße Steuerungsverfahren bzw. die erfindungsgemäße Steuerungsvorrichtung können sich untereinander vernetzt konfigurierte Steuerungen von Handhabungsgeräten beliebig und ohne komplexe und anfällige Hardware-Anforderungen synchronisieren. Die Synchronisation ist bezüglich des Ablaufs der Steuerungsprogramme eindeutig festgelegt, so dass bei einer Satzanwahl innerhalb der Steuerungsprogramme keine Konflikte zwischen den zu synchronisierenden Handhabungsgeräten, wie Kollisionen, auftreten können.

Nach einer Weiterbildung der Erfindung ist vorgesehen, dass der Austausch von Steuerungsinformationen zwischen gleichberechtigten Steuerungen auf einer gemeinsamen hierarchischen Ebene erfolgt. Es existiert folglich keine Master-Steuerung, die zwangsläufig an jeder Synchronisation beteiligt sein müsste. Vielmehr sind alle beteiligten Steuerungen flexibel miteinander synchronisierbar, ohne dass hierzu spezielle Programmkonstellationen vorab festgelegt oder multiple Programmabläufe in den Steuerungen gespeichert sein müssen.

Um das erfindungsgemäße Synchronisationsverfahren möglichst einfach und effizient zu gestalten, ist nach einer bevorzugten Weiterbildung der Erfindung vorgesehen, dass mittels der Datenstrukturen zumindest Identifikationsdaten für die Synchronisationspunkte, Optionsdaten zur Programmablauf-Steuerung und Adressdaten der zu synchronisierenden Steuerungen definiert werden. Bei den Identifikationsdaten handelt es sich nach einer weiteren Ausgestaltung der Erfindung vorzugsweise um Zeichenketten (Strings), durch die die Synchronisationspunkte innerhalb eines Programms eindeutig identifizierbar sind. Nach einer Weiterentwicklung der erfindungsgemäßen Steuerungsverfahren ist vorgesehen, dass die Steuerungsinformationen das Erreichen eines Synchronisationspunkts durch die aussendende Steuerung anzeigen. Der weitere Programmablauf ergibt sich erfindungsgemäß in Verbindung mit den Inhalten der in den Steuerungen enthaltenen Datenstrukturen.

Nach einer bevorzugten Weiterentwicklung der Erfindung handelt es sich bei den Optionsdaten um einfache Binärzeichen, d.h. Bits, die die Werte 0 und 1 annehmen können. Mit Hilfe der Optionsdaten wird der Steuerung mitgeteilt, wie sich der Roboter bei Erreichen eines Synchronisationspunktes zu verhalten hat.

Die Adressdaten liegen vorzugsweise in Form einer Liste von IP-Adressen vor.

Die Kommunikation der Steuerungen untereinander erfolgt vorzugsweise unter Verwendung der Ethernet-Technologie und des UDP-Protokolls zur Datenübertragung. Das Kommunikationsprotokoll UDP (User Datagram Protocol) ist dem häufig eingesetzten TCP/IP-Protokoll verwandt, erlaubt jedoch aufgrund geringeren Verwaltungsaufwands eine höhere Übertragungsgeschwindigkeit. Die zu übertragenden Steuerungsinformationen werden in Datagramme bestimmter maximaler Größe verpackt und mittels der IP-Adressen, die einen Rechner (eine Steuerung) eindeutig kennzeichnen, adressiert. Daher ist nach einer Weiterentwicklung der erfindungsgemäßen Vorrichtung vorgesehen, dass die Steuerungsinformationen wenigstens Identifikationsdaten für die erreichten Synchronisationspunkte und Adressdaten zum Identifizieren der sendenden Vorrichtung beinhalten. Erfindungsgemäß ist damit eine schnelle und standardisierte Informationsübertragung zwischen den zu synchronisierenden Steuerungen gewährleistet.

Die Informationsübertragung geschieht über ein Kommunikationsnetz mit Sterntopologie, das hierzu vorzugsweise einen Hub aufweist.

Weitere Einzelheiten der Erfindung ergeben sich aus der nachfolgenden Beschreibung von Ausführungsbeispielen anhand der Zeichnungen. Es zeigt bzw. zeigen:
- Fig. 1a, b, c: schematische Weg-Zeit-Diagramme zur Darstellung einer Zusammenarbeit von drei Handhabungsgeräten mit zeitweiser Synchronisation;
- Fig. 2: ein Ablaufdiagramm des erfindungsgemäßen Synchronisationsverfahrens;
- Fig. 2a: eine schematische Darstellung der im Zuge des erfindungsgemäßen Verfahrens verwendeten Datenstruktur;
- Fig. 2b: eine schematische Darstellung der im Zuge des erfindungsgemäßen Verfahrens verwendeten Steuerungsinformationen;
- Fig. 3: ein zeitlich aufgelöstes Beispiel für eine teilweise synchronisierte Kooperation dreier Roboter;
- Fig. 4: ein weiteres zeitlich aufgelöstes Beispiel einer teilweise synchronisierten Kooperation dreier Roboter;
- Fig. 5: ein Blockschaltbild einer Ausführungsform des erfindungsgemäßen Steuerungssystems;
und
- Fig. 6: eine schematische Darstellung des im Rahmen der Erfindung eingesetzten Kommunikationsnetzes.

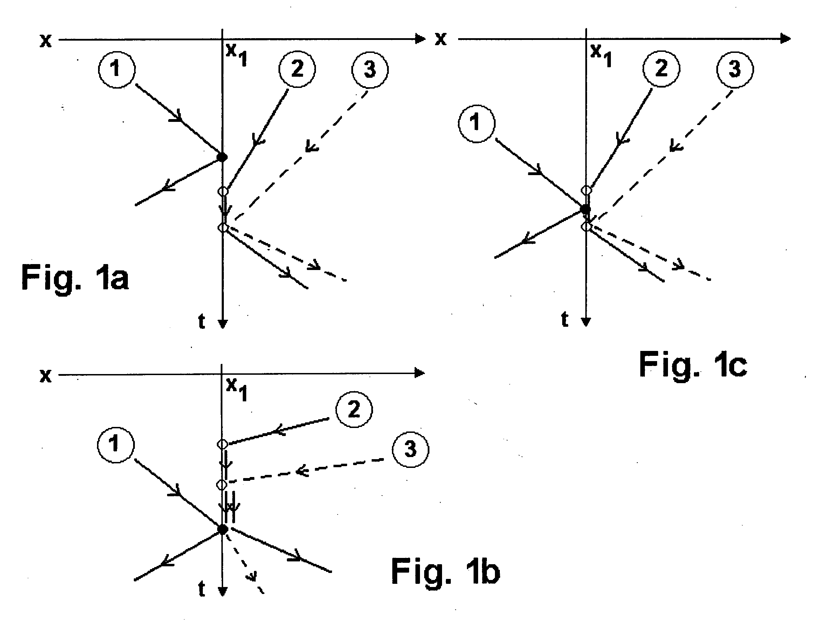

Figur 1 stellt den Sachverhalt bei der Synchronisation kooperierender Roboter 1, 2, 3 schematisch anhand von Weg-Zeit-Diagrammen dar. Dabei sind die räumlichen Koordinaten einer Roboterbewegung mit x und die Zeitkoordinate mit t bezeichnet. Durchgezogene bzw. gestrichelte Linien entsprechen Roboterbewegungen im Raum und in der Zeit. Insbesondere geben waagerechte Linien parallel zur t-Achse an, dass der entsprechende Roboter 1, 2, 3 räumlich stillsteht und eine "Bewegung" allein in der Zeitkoordinate t stattfindet, d.h. der Roboter wartet an einem bestimmten Ort x.

Bei den in Figur 1 a)-c) dargestellten Situationen sollen drei Roboter 1, 2, 3 synchronisiert werden. Roboter 2 und Roboter 3 müssen aufeinander warten, und es muss sichergestellt werden, dass Roboter 1 bereits am Synchronisationspunkt war. Gegebenenfalls muss auf Roboter 1 gewartet werden. Dies entspricht einer Situation, bei der Roboter 2 und Roboter 3 gemeinsam einen Gegenstand handhaben, der zuvor von Roboter 1 an einen bestimmten Ort abgelegt werden muss. Nach erfolgtem Ablegen kann Roboter 1 sofort wieder einen neuen Gegenstand holen, d.h. er muss nicht auf die Roboter 2 und 3 warten.

Bei Fig. 1a) trifft Roboter 1 vor den Robotern 2 und 3 am Ort x₁ ein, legt dort den Gegenstand ab (schwarzer Punkt) und setzt anschließend seine Bewegung fort. Kurz darauf trifft Roboter 2 am selben Ort ein (oberer Kreis) und wartet dort auf das Eintreffen von Roboter 3 (unterer Kreis), woraufhin Roboter 2 und Roboter 3 gemeinsam den vom Roboter 1 gelieferten Gegenstand bearbeiten und anschließend ihre Bewegungen gegebenenfalls getrennt fortsetzen können.

Bei Fig. 1b) trifft zunächst Roboter 2 und anschließend Roboter 3 am Ort x ein, so dass beide Roboter gemeinsam auf Roboter 1 warten müssen. Bei Fig. 1c) ist schließlich einer der Roboter 2, 3 vor Roboter 1 am vereinbarten Ort x₁ und wartet dort auf den mit ihm synchronisierten anderen Roboter, während Roboter 1 unabhängig davon seine Bewegung fortsetzt.

Bei den vorstehend behandelten Beispielen der Fig. 1a) bis Fig. 1c) entspricht der vorbestimmte Ort x₁, an dem die Bewegungsbahnen der Roboter 1, 2, .3 zusammentreffen und der im Rahmen der Darstellung durch den Schnittpunkt der t-Achse mit der x-Achse bestimmt ist, einem entsprechenden Punkt im jeweiligen Steuerungsprogramm für jeden Roboter 1, 2, 3. Es ist folglich erforderlich, dass an dieser Stelle im Programm an die Roboter 2 und 3 die Anweisung ergeht, auf den jeweils anderen zu warten, wobei darüber hinaus zu berücksichtigen ist, ob Roboter 1 (wie in Fig. 1a)) bereits am Synchronisationspunkt war oder ob Roboter 1 (wie in Fig. 1b) und Fig. 1 c)) diesen Punkt noch nicht erreicht hat, die Roboter 2 und 3 (Fig. 1b)) bzw. der Roboter 2 (Fig. 1c)) also auf ihn warten müssen.

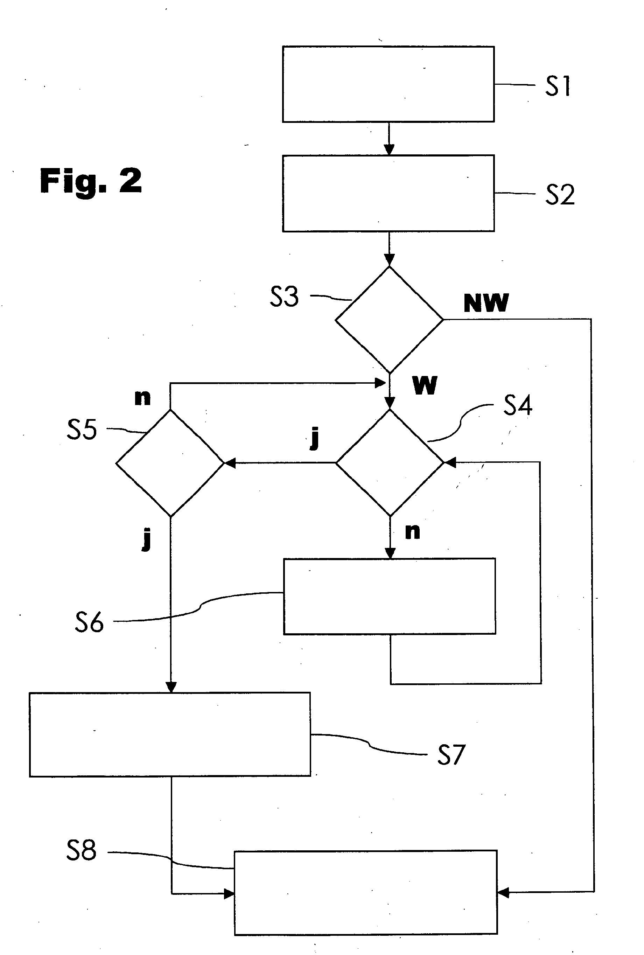

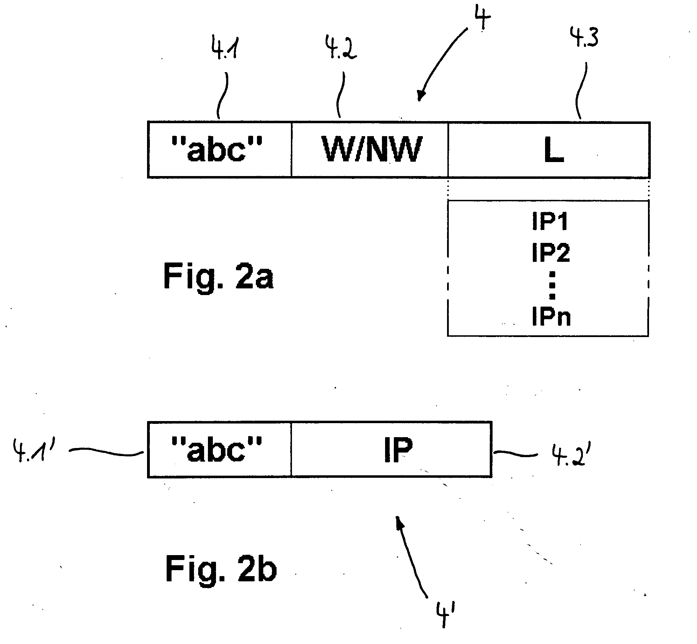

Der Sachverhalt ist in Figur 2 nochmals anhand eines Ablaufdiagramms für einen erfindungsgemäßen Synchronisationsvorgang angegeben. Beim ersten Schritt S1 ergeht innerhalb des Steuerungsprogramms die Anweisung an die entsprechende Robotersteuerung, sich unter Beachtung gewisser optionaler Parameter mit bestimmten anderen an der Synchronisation beteiligten Steuerungen zu synchronisieren, wobei die Anweisung, d.h. der Synchronisationspunkt durch eine Identifikations-Zeichenkette eindeutig bezeichnet ist. Anschließend wird in Schritt S2 an alle beteiligten Roboter die Information gesendet, dass derjenige Roboter, in dessen Steuerung die dargestellten Vorgänge ablaufen, den Synchronisationspunkt erreicht hat. In Schritt S3 wird unter Berücksichtigung der Inhalte des Schrittes S1 geprüft, wie sich die Steuerung bzw. der Roboter am Synchronisationspunkt zu verhalten hat. Muss der Roboter warten W (vgl. Roboter 2 in Fig. 1b), 1c)), so erfolgt in Schritt S4 die Abfrage, ob die anderen an der Synchronisation beteiligten Roboter ebenfalls ihr Eintreffen am Synchronisationspunkt gemeldet haben, woraufhin (j) gegebenenfalls die Identifikations-Zeichenketten der eintreffenden Meldungen auf Übereinstimmung in Schritt S5 geprüft werden. Andernfalls kann an Schritt S4 anschließend in Schritt S6 eine Wartemeldung an den Anwender ergehen, beispielsweise in Form einer Bildschirmanzeige, eines sonstigen optischen oder akustischen Signals, in Form eines Logfile-Eintrags oder dergleichen. Anschließend kehrt das Steuerungsprogramm nach Schritt S4 zurück und wiederholt diesen (und gegebenenfalls Schritt S6) schleifenartig, bis alle Meldungen vorliegen. Liegt in Schritt S5 keine Übereinstimmung der Identifikationsdaten der eintreffenden Meldungen vor (n), so kehrt das Steuerungsprogramm ebenfalls zu Schritt S4 zurück. Andernfalls (j) wird die Wartemeldung gegebenenfalls gelöscht (Schritt S7) und die Programmbearbeitung in Schritt S8 fortgesetzt. Ein anfängliches Verneinen (n) der Abfrage S3 führt das Programm direkt zum Schritt S8, da in diesem Fall ein Warten des entsprechenden Roboters nicht erforderlich ist.

Die Synchronisationsanweisung des Schrittes S1 ist in Figur 2a schematisch dargestellt. Sie liegt in Form einer Datenstruktur 4 vor, die einzelne Dateneinträge 4.1-4.3 umfasst, namentlich eine Identifikations-Zeichenkette 4.1 (Identifikations-String) zur eindeutigen Identifikation des jeweiligen Synchronisationspunktes in einem Programmablauf, ein binäres Optionszeichen 4.2 (Wait-Option) und eine Steuerungsliste 4.3 der Steuerungen, die an der jeweiligen Synchronisation beteiligt sind.

Der String 4.1 ist eine alpha-numerische Zeichenkette und dient dazu, bestimmte Synchronisationspunkte innerhalb eines Steuerungsprogramms eindeutig zu identifizieren. Der Anwender gibt jedem der programmierten Synchronisationspunkte einen eindeutigen und möglichst sprechenden Namen ("Start", "Holen", "Ende" etc). Der gleiche Synchronisationspunkt muss dann auch in den anderen an der Synchronisation beteiligten Steuerungen den gleichen Namen aufweisen, damit eine Synchronisation mit diesem Synchronisationspunkt möglich und die Sicherheit im Falle einer Satzanwahl innerhalb des Programms gegeben ist.

Die Wait-Option 4.2 kann als einfaches Binärzeichen nur die Werte 0 und 1 annehmen, d.h. sie ist gesetzt (Wert 1) oder nicht gesetzt (Wert 0). Letzterer Fall wird auch als Setzen einer No-Wait-Option bezeichnet. Ist die Wait-Option gesetzt (Wert 1), so wartet die entsprechende Steuerung darauf, dass auch alle anderen an der Synchronisation beteiligten - und damit in der Steuerungsliste 4.3 aufgeführten - Steuerungen ebenfalls am Synchronisationspunkt angelangt sind, d.h. ihre entsprechenden Meldungen abgesendet haben (vgl. Figur 2). Ist dagegen - beispielsweise in der Steuerung des Roboters 1 - die No-Wait-Option gesetzt (Wert 0), so wartet diese spezielle Steuerung nicht darauf, dass alle anderen an der Synchronisation beteiligten Steuerungen ebenfalls am Synchronisationspunkt angelangt sind und ihre entsprechenden Meldungen abgegeben haben, sondern signalisiert lediglich den anderen Steuerungen, dass sie selbst bereits am Synchronisationspunkt war und setzt anschließend ihre Programmbearbeitung bzw. die Roboterbewegung fort- während die anderen in der Steuerungsliste 4.3 aufgeführten Steuerungen des Roboters 1, für welche die Wait-Option gesetzt ist, auf die beispielhaft genannte Steuerung warten müssen.

Die Steuerungsliste 4.3 liegt als Liste der IP-Adressen der Steuerungen vor, die an einer Synchronisation beteiligt sind. Es handelt sich dabei um diejenigen IP-Adressen, an welche die Steuerung die vorstehend erwähnten Meldungen absendet, wenn sie selbst am Synchronisationspunkt angelangt und auf deren Meldungen sie gegebenenfalls wartet (bei gesetzter Wait-Option). Dabei ist das Absenden der Meldung unabhängig davon, ob die entsprechende Steuerung anschließend die Programmbearbeitung unterbricht (Wait-Option) oder mit der Programmbearbeitung fortfährt (No-Wait-Option).

Fig. 2b zeigt schematisch eine erfindungsgemäße Steuerungsinformation 4', wie sie von den beteiligten Steuerungen beim jeweiligen Erreichen eines Synchronisationspunktes ausgesendet bzw. ausgetauscht werden.

Eine erfindungsgemäße Steuerungsinformation 4' ist ein Datenpaket, dessen Inhalte 4.1', 4.2' von den empfangenden Robotersteuerungen zu Steuerungszwecken einsetzbar sind (vgl. Fig. 2). Dazu ist vorgesehen, dass die Steuerungsinformationen 4' wenigstens Identifikationsdaten für die erreichten Synchronisationspunkte und Adressdaten zum Identifizieren der sendenden Vorrichtung enthalten.

Die Identifikationsdaten 4.1' liegen vorzugsweise in Form einer alpha-numerischen Zeichenkette (String) vor, durch welche der Synchronisationspunkt, an dem die Information 4' gesendet wurde, eindeutig identifizierbar ist.

Die Adressdaten 4.2' liegen vorzugsweise in Form einer IP-Adresse der sendenden Steuerung vor, so dass die empfangenden Steuerungen eindeutig feststellen können, welche Steuerung die Steuerungsinformationen 4' gesendet hat.

Im Falle einer gesetzten Wait-Option (vgl. Fig. 2) ist es erforderlich, dass eine Steuerung derartige Informationspakete 4' von allen anderen an der Synchronisation beteiligten Steuerungen empfängt, die in der Liste 4.3 der Datenstruktur 4 der Steuerung verzeichnet sind, bevor mit der Programmbearbeitung in der Steuerung fortgefahren werden kann.

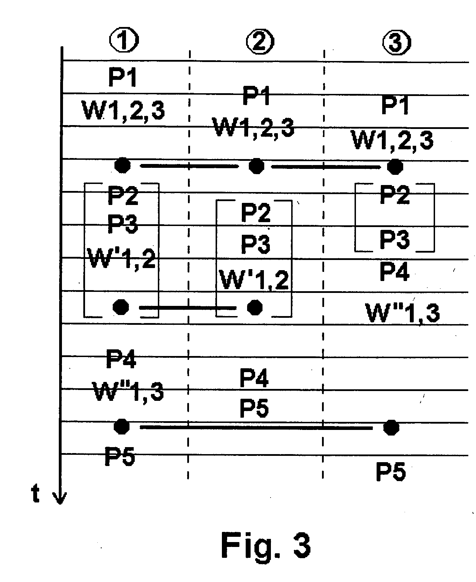

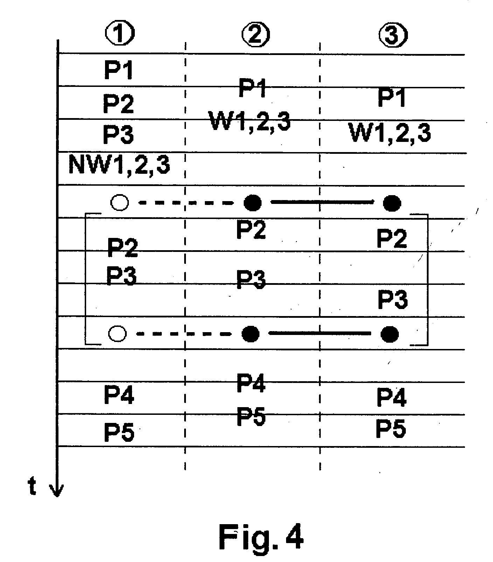

Die folgenden Figuren 3 und 4 stellen Beispiele synchronisierter Steuerungsabläufe dar.

Am Beispiel der Figur 3 sind Steuerungs- bzw. Bewegungsabläufe für drei Roboter 1, 2, 3 zeitlich aufgelöst dargestellt, wobei t die Zeitkoordinate angibt. Bestimmte Stellen im Steuerungsprogramm der Roboter 1, 2, 3, die bestimmten Punkten einer Roboterbewegung (Posen) entsprechen, sind mit Pi (1 = 1, 2, ...) bezeichnet. Die Angaben W, W', W'' bezeichnen Synchronisierungs-Anweisungen mit gesetzter Wait-Option zu verschiedenen Synchronisationspunkten; die nachfolgenden Zahlen bezeichnen die beteiligten Roboter 1, 2, 3. Synchronisationspunkte sind als schwarze Kreise angegeben, wobei die waagerechte Linien noch einmal verdeutlichen, zwischen welchen Robotern 1, 2, 3 die Synchronisation stattfindet. Eckige Klammern [] deuten wiederholte Steuerungs- bzw. Bewegungsabläufe an. Die dünnen waagerechten Linien markieren gleiche Zeiten t und dienen lediglich der besseren zeitlichen Orientierung.

Beim Beispiel der Figur 3 werden zunächst alle drei Steuerungen miteinander synchronisiert, wobei sie nach Erreichen des (Programm-)Punktes P1 aufeinander warten (W1,2,3). Im folgenden Programmablauf synchronisieren sich (wiederholt) Roboter 1 und Roboter 2 (W'1,2), während Roboter 3 davon unabhängig (wiederholt) die Punkte P2-P4 ansteuert. Anschließend findet noch eine Synchronisation zwischen Roboter 1 und Roboter 3 statt (W2'1,3). W, W' und W'' stehen für Synchronisationspunkte, die mit jeweils einem anderen String eindeutig identifiziert sind. So kann z.B. der Synchronisationspunkt W mit "Start", der Synchronisationspunkt W' mit "Holen" und der Synchronisationspunkt W'' mit "Ende" bezeichnet sein.

Das Beispiel der Figur 3 verdeutlich nochmals, dass sich jede vernetzt konfigurierte Steuerung beliebig mit jeder anderen Steuerung synchronisieren kann. Es existiert , anders als bei vorbekannten Steuerungsverfahren, keine Master-Steuerung, die zwangsläufig an jeder Synchronisation beteiligt sein muss.

Beim Beispiel der Figur 4 ist die Sequenzialisierung von Steuerungsabläufen unter Verwendung der No-Wait-Option dargestellt. Die Bezeichnungen entsprechen denen der Figur 3, wobei jedoch NW die No-Wait-Option angibt.

Die Steuerung des Roboters 1 trifft nach Erreichen des Punktes P3 auf eine Synchronisationsanweisung, bei der die Wait-Option 4.2 nicht gesetzt ist (Wert 0; vgl. Figur 2a), so dass die Steuerung lediglich eine Meldung, z.B. vom Typ der Steuerungsinformation 4', an die Steuerungen der Roboter 2 und 3 versendet, jedoch selbst nicht am Synchronisationspunkt wartet. Anders die Roboter 2 und 3: Ihre Datenstrukturen 4 beinhalten eine gesetzte Wait-Option W1,2,3 (Wert 1), so dass ihre Steuerungen am Synchronisationspunkt aufeinander und auf die Meldung 4' des Roboters 1 warten.

Dieser Vorgang kann sich wiederholen und entspricht im übrigen genau der Darstellung der Figur 1.

Der Steuerungsablauf der Figur 4 kodiert beispielsweise eine Situation, in der Roboter 1 ein Bauteil in einer Vorrichtung ablegen muss, welches anschließend synchron durch Roboter 2 und Roboter 3 bearbeitet wird. Entsprechend könnte der ID-String 4.1 der Anweisung W1,2,3/NW1,2,3 "Ablegen" lauten bzw. die Meldung 4' entsprechende Identifikations-Daten 4.1' enthalten. In diesem Beispiel hat Roboter 1 die No-Wait-Option in seiner Programm-Synchronisierungs-Anweisung, da Roboter 1 im Gegensatz zu Roboter 2 und Roboter 3 nach Erreichen des Synchronisationspunktes nicht warten muss. Roboter 1 signalisiert Roboter 2 und Roboter 3, dass er bereits am Synchronisationspunkt war. Letztere warten aufeinander und darauf, dass Roboter 1 sein Eintreffen am Synchronisationspunkt signalisiert.

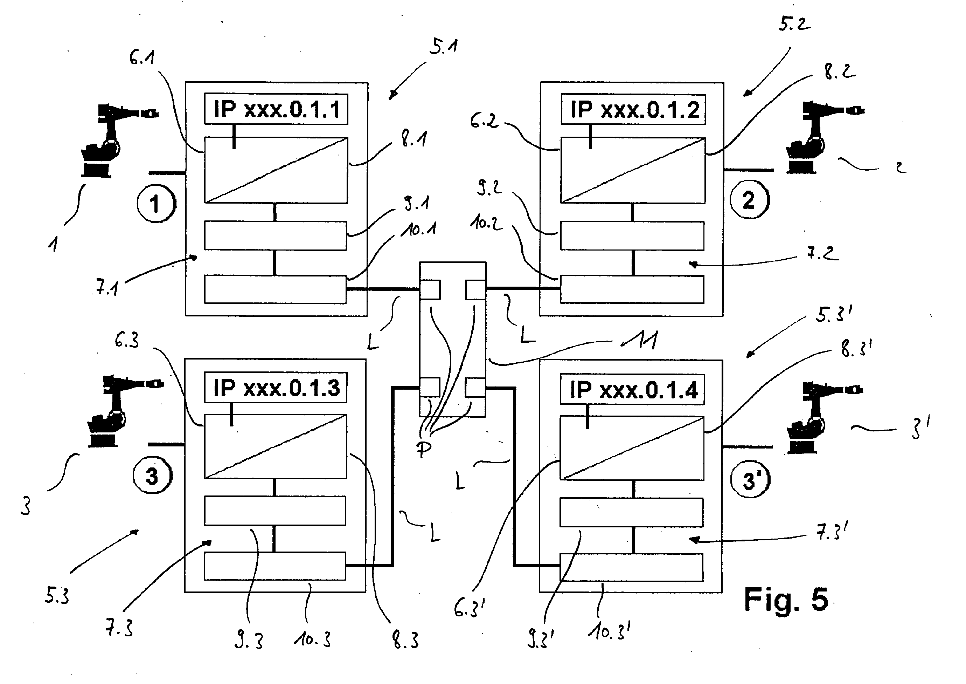

Figur 5 zeigt anhand eines Blockschaltbildes den Aufbau eines Steuerungssystems aus erfindungsgemäßen Vorrichtungen zum synchronen Steuern mehrerer Roboter 1, 2, 3, 3'. Jeder Roboter 1, 2, 3, 3' besitzt eine Steuerung 5.1, 5.2, 5.3, 5.3', wobei die Steuerungen wenigstens aufweisen: Speichermittel 6.1., 6.2, 6.3, 6.3' wenigstens zum Speichern eines Steuerungsprogramms für den Roboter, Kommunikationsmittel 7.1, 7.2, 7.3, 7.3' zum Senden und Empfangen von Steuerungsinformationen 4' (vgl. Figur 2a) an andere bzw. von anderen zu synchronisierende(n) Steuerungen 5.1-5.3' und Prozessormittel 8.1, 8.2, 8.3, 8.3' zum Ausführen des Steuerungsprogramms in Abhängigkeit von den empfangenen Steuerungsinformationen 4'. Die Kommunikationsmittel 7.1-7.3' weisen beim gezeigten Ausführungsbeispiel jeweils Treibermittel 9.1, 9.2, 9.3, 9.3', z.B. Ethernet-Treibermittel, und eine Netzwerkkarte 10.1, 10.2., 10.3, 10.3' auf. Über Kommunikationsleitungen sind die Steuerungen 5.1-5.3' mit den Ports P eines Hubs 11 verbunden und so miteinander verknüpft. Im einfachsten Falle eines passiven Hubs 11 wird ein an einem Port P ankommendes Datenpaket an alle anderen Ports P verteilt und so für alle Segmente des Netzes, d.h. die Steuerungen 5.1-5.3' mit den zugehörigen Leitungen L sichtbar gemacht. Ein Switching-Hub (Switch) registriert die Zieladresse eines Datenpakets und leitet es nur an den entsprechenden Port P weiter.

Die Speichermittel 6.1-6.3' der Steuerungen 5.1-5.3' dienen neben dem Speichern von Steuerungsprogrammen auch zum Ablegen der IP-Adressen der jeweiligen Steuerung, durch welche die Steuerungen eindeutig identifizierbar und ansprechbar sind.

In der Kommunikation der sternförmig vernetzten Steuerungen 5.1-5.3' sind diese vollständig gleichberechtigt. Keine der Steuerungen hat einen Master-Status und kann daher mit jeder anderen Steuerung entsprechende erfindungsgemäße Programmsynchronisationen bearbeiten.

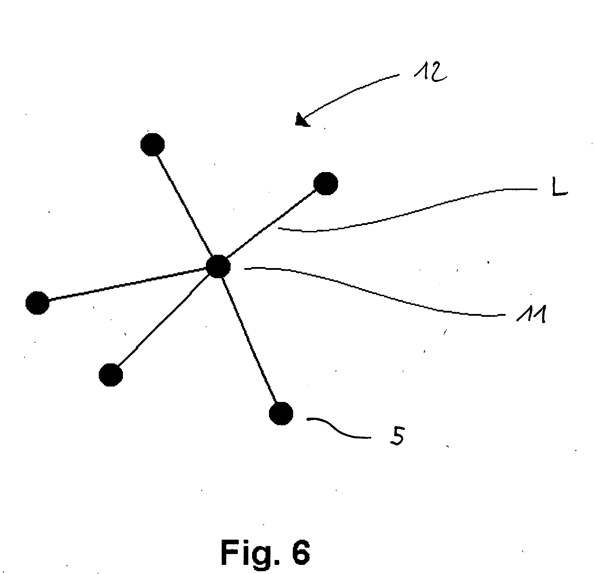

Figur 6 zeigt nochmals vereinfachend schematisch die Topologie des erfindungsgemäßen Kommunikationsnetzes 12 in Form einer Sterntopologie mit zentralem Hub 11 und Segmenten L, an deren Enden Knoten in Form der Robotersteuerungen 5.1-5.3' angeordnet sind.

### Bezugszeichenliste

- 1, 2, 3, 3': Roboter
- 4: Datenstruktur
- 4.1: Identifikations-Zeichenkette
- 4.2: Synchronisierungsoption
- 4.3: Steuerungsliste
- 4': Steuerungsinformation
- 4.1': Identifikations-Zeichenkette
- 4.2': Steuerungsadresse
- 5.1, 5.2, 5.3, 5.3': Steuerungen
- 6.1, 6.2, 6.3, 6.3': Speichermittel
- 7.1, 7.2, 7.3, 7.3': Kommunikationsmittel
- 8.1, 8.2, 8.3, 8.3': Prozessormittel
- 9.1, 9.2, 9.3, 9.3': Treibermittel
- 10.1, 10.2, 10.3, 10.3': Netzwerkkarte
- 11: Hub
- 12: Netz
- L: Kommunikationsleitung/Netzsegment
- P: Port
- NW: No-Wait-Option
- W: Wait-Option
- P1: (Synchronisations-)Punkt
- x₁: Ort

## Patentansprüche

1. Verfahren zum synchronen Steuern mehrerer Handhabungsgeräte, wie einer Mehrzahl von Industrierobotern, **dadurch gekennzeichnet, dass** die Steuerungen bestimmter Handhabungsgeräte nach Maßgabe durch in den entsprechenden Steuerungsprogrammen enthaltener Datenstrukturen, durch die sich zu synchronisierende Steuerungen und Synchronisationspunkte in den dort ablaufenden Steuerungsprogrammen eindeutig identifizieren lassen, Steuerungsinformationen austauschen und dass der Steuerungsablauf in den zu synchronisierenden Steuerungen nach Erreichen der Synchronisationspunkte in allen Steuerungen gemeinsam nach Maßgabe durch Inhalte der Datenstrukturen in Verbindung mit bereits ausgetauschten Steuerungsinformationen fortgesetzt wird.

2. Verfahren zum synchronen Steuern mehrerer Handhabungsgeräte, wie einer Mehrzahl von Industrierobotern, insbesondere nach Anspruch 1, **dadurch gekennzeichnet, dass** die Steuerungen bestimmter Handhabungsgeräte nach Maßgabe durch in den entsprechenden Steuerungsprogrammen enthaltener Datenstrukturen, durch die sich zu synchronisierende Steuerungen und Synchronisationspunkte in den dort ablaufenden Steuerungsprogrammen eindeutig identifizieren lassen, Steuerungsinformationen austauschen und dass der Steuerungsablauf bis zum Eintreffen von Informationen anderer zu synchronisierender Steuerungen, dass diese den gemeinsamen Synchronisationspunkt erreicht haben, unterbrochen wird.

3. Verfahren nach Anspruch 1 oder 2, **dadurch gekennzeichnet, dass** die Steuerungsinformationen bei Erreichen eines Synchronisationspunkts durch die aussehende Steuerung ausgesendet werden.

4. Verfahren nach einem der Ansprüche 1 bis 3, **dadurch gekennzeichnet, dass** durch die Datenstrukturen zumindest Identifikationsdaten für die Synchronisationspunkte, Optionsdaten zur Programmablauf-Steuerung und Adressdaten der zu synchronisierenden Steuerungen definiert werden.

5. Verfahren nach einem der Ansprüche 1 bis 4, **dadurch gekennzeichnet, dass** der Informationsaustausch zwischen gleichberechtigten Steuerungen erfolgt.

6. Vorrichtung zum synchronen Steuern eines Handhabungsgeräts, wie eines Industrieroboters, in einem Verbund aus vernetzten Steuerungen einer Mehrzahl von Handhabungsgeräten, aufweisend:
- Speichermittel wenigstens zum Speichern eines Steuerungsprogramms für das Handhabungsgerät;
- Kommunikationsmittel zum Senden und Empfangen von Steuerungsinformationen an andere bzw. von anderen zu synchronisierende(n) Steuerungen; und
- Prozessormittel zum Ausführen des Steuerungsprogramms in Abhängigkeit von den empfangenen Steuerungsinformationen,
**dadurch gekennzeichnet, dass**
- in den Speichermitteln (6.1-6.3') eine Anzahl steuerungsrelevanter Datenstrukturen (4) gespeichert ist; und
- dass die steuerungsrelevanten Datenstrukturen Steuerungsabschnitte zum Fortsetzen des Steuerungsablaufs nach Erhalt einer Nachricht von den drehbaren Steuerungen aufweisen, dass diese den entsprechenden Synchronisationspunkt erreicht haben.

7. Vorrichtung zum synchronen Steuern eines Handhabungsgeräts, wie eines Industrieroboters, in einem Verbund aus vernetzten Steuerungen einer Mehrzahl von Handhabungsgeräte, insbesondere nach Anspruch 6, **dadurch gekennzeichnet, dass**
- Speichermittel wenigstens zum Speichern eines Steuerungsprogramms für das Handhabungsgerät; und
- das die steuerungsrelevanten Datenstrukturen Steuerungsabschnitte zum Anhalten des Steuerungsablaufs bis zum Eintreffen von Informationen anderer synchronisierender Steuerungen, das diese den gemeinsamen Synchronisationspunkt erreicht haben.

8. Vorrichtung nach Anspruch 6 oder 7, **dadurch gekennzeichnet, dass** der Programmablauf in den Prozessormitteln (8.1, 8.2, 8.3, 8.3') bzw. eine entsprechende Bewegung des Handhabungsgeräts (1,2,3,3') nach Maßgabe durch die in den Datenstrukturen (4) enthaltenen Steuerungsdaten (4.1,4.2,4.3) in Verbindung mit bereits ausgetauschten Steuerungsinformationen fortsetzbar oder zumindest bis zum Empfang entsprechender Informationen (4') von anderen zu synchronisierenden Steuerungen (5.1-5.3') anhaltbar ist.

9. Vorrichtung nach einem der Ansprüche 6 bis 8, **dadurch gekennzeichnet, dass** die Sendezeitpunkte der Steuerungsinformationen (4') den Zeitpunkten des Erreichens der Synchronisationspunkte (Pi) entsprechen.

10. Vorrichtung nach einem der Ansprüche 1 bis 9, **dadurch gekennzeichnet, dass** durch die Datenstrukturen (4) enthaltenen Steuerungsdaten (4.1,4.2,4.3) Synchronisationspunkte (Pi) in dem Steuerungsprogramm und die zu synchronisierenden Steuerungen (5.1-5.3') eindeutig identifizierbar sind.

11. Vorrichtung nach einem der Ansprüche 6 bis 10, **dadurch gekennzeichnet, dass** die Datenstrukturen (4) wenigstens beinhalten:
- Identifikationsdaten (4.1) für die Synchronisationspunkte (Pi);
- Optionsdaten (4.2) zur Programmablauf-Steuerung; und
- Adressdaten (4.3) der zu synchronisierenden Steuerungen (5.1-5.3')

12. Vorrichtung nach Anspruch 11, **dadurch gekennzeichnet, dass** die Identifikationsdaten (4.1) in Form von Zeichenketten vorliegen.

13. Vorrichtung nach Anspruch 11 oder 12, **dadurch gekennzeichnet, dass** die Optionsdaten (4.2) einfachen Binärzeichen sind.

14. Vorrichtung nach einem der Ansprüche 11 bis 13, **dadurch gekennzeichnet, dass** die Adressdaten (4.3) als Liste von IP-Adressen vorliegen.

15. Vorrichtung nach einem der Ansprüche 6 bis 14, **dadurch gekennzeichnet, dass** diese durch ein Kommunikationsnetz (12) mit Sterntopologie mit den anderen zu synchronisierenden Steuerungen (5.1-5.3') verbunden ist.

16. Vorrichtung nach Anspruch 15, **dadurch gekennzeichnet, dass** das Kommunikationsnetz (12) einen Hub (11) zum Verteilen der Steuerungsinformationen (4') aufweist.

17. Vorrichtung nach einem der Ansprüche 6 bis 16, **dadurch gekennzeichnet, dass** die Steuerungsinformationen (4') wenigstens beinhalten:
- Identifikationsdaten (4.1') für die erreichten Synchronisationspunkte (Pi); und
- Adressdaten (4.2') zum Identifizieren der sendenden Vorrichtung.

18. Vorrichtung nach einem der Ansprüche 6 bis 17, **dadurch gekennzeichnet, dass** diese und die anderen zu synchronisierenden Steuerungen (5.1-5.3') auf einer gemeinsamen Hierarchieebene angeordnet sind.

19. Verbund aus mindestens zwei Vorrichtungen nach einem der Ansprüche 6 bis 18.
